# EUROPEAN PATENT SPECIFICATION

(11) **EP 4 470 808 B1**
(45) Date of publication and mention of the grant of the patent: **25.02.2026**
(21) Application number: 24178373.7
(22) Date of filing: 28.05.2024
(51) Int. Cl.: B60H 1/00

(54) **HEATING AND/OR AIR CONDITIONING DEVICE FOR A MOTOR VEHICLE**
HEIZ- UND/ODER KLIMAANLAGE FÜR EIN KRAFTFAHRZEUG
DISPOSITIF DE CHAUFFAGE ET/OU DE CLIMATISATION POUR VÉHICULE AUTOMOBILE

(30) Priority: 30.05.2023 IT 202300010914
(43) Date of publication of application: 04.12.2024
(73) Proprietor: DENSO THERMAL SYSTEMS S.p.A., 10046 Poirino (Torino) (IT)
(72) Inventor: SEJA, Paolo, I-10046 POIRINO (Torino) (IT); BALZO, Michele, I-10046 POIRINO (Torino) (IT); DESTEFANIS, Riccardo, I-10046 POIRINO (Torino) (IT); CERRATO, Marco, I-10046 POIRINO (Torino) (IT)
(74) Representative: Vanzini, Christian

(56) References cited:
- DE-A1- 4 023 306
- JP-A- 2003 211 937

## Description

The present invention relates to a heating and/or air conditioning device for a motor vehicle, comprising
a mixing section comprising an air transmitting branch and an air heating branch, both supplied by an air inlet and communicating with each other through a mixing zone, and mixing means configured to distribute an air flow between the air transmitting branch and the air heating branch, wherein said mixing means are movable between two extreme positions comprising a closure position in which the mixing means prevent the air inlet and the mixing zone from communicating with each other through the air heating branch, and force the air flow to pass through the air transmitting branch, and an opening position in which the mixing means prevent the air inlet and the mixing zone from communicating with each other through the air transmitting branch, and force the air flow to pass through the air heating branch;
air distribution means interposed between the mixing section and a plurality of air outlets of the heating and/or air conditioning device.

Devices of this type are known, wherein the mixing means comprise doors of different types, which are generally adapted to oscillate between two extreme positions, that is, an "all-hot" position and an "all-cold" position, and to occupy a plurality of intermediate positions. The treated air flow is generated by a fan located upstream of the air inlet.

Document JP2003211937 discloses a heating and/or air conditioning device for a motor vehicle, comprising a mixing section comprising an air transmitting branch and an air heating branch, both supplied by an air inlet and communicating with each other through a mixing zone, and mixing means configured to distribute an air flow between the air transmitting branch and the air heating branch, wherein said mixing means are movable between two extreme positions comprising a closure position in which the mixing means prevent the air inlet and the mixing zone from communicating with each other through the air heating branch, and force the air flow to pass through the air transmitting branch, and an opening position in which the mixing means prevent the air inlet and the mixing zone from communicating with each other through the air transmitting branch, and force the air flow to pass through the air heating branch; air distributing means interposed between the mixing section and a plurality of air outlets of the heating and/or air conditioning device; wherein said air distributing means comprise a housing arranged at the mixing zone, wherein said housing defines a chamber, and further defines a first distribution inlet facing the chamber and connected with the air transmitting branch and the air heating branch, and at least one distribution outlet facing the chamber and connected with at least one of the air outlets of the heating and/or air conditioning device, and a door rotatably mounted in the chamber to control distribution of the air flow between the distribution inlets and the at least one distribution outlet.

One object of the present invention is to provide a solution for improving the stratification of the air flow from the mixing area to the air outlets of the heating and/or air conditioning device.

This object is achieved according to the invention by a device of the type defined above, wherein said air distribution means comprise a housing arranged at the mixing zone, wherein said housing defines a chamber and further defines a first distribution inlet and a second distribution inlet facing the chamber and connected with the air transmitting branch and the air heating branch, respectively, and at least one distribution outlet facing the chamber and connected with at least one of the air outlets of the heating and/or air conditioning device, and
a door rotatably mounted in the chamber to control the distribution of the air flow between the distribution inlets and the at least one distribution outlet,
wherein the door is movable among a first position in which the door puts the sole first distribution inlet in communication with the at least one distribution outlet, a second position in which the door puts the sole second distribution inlet in communication with the at least one distribution outlet, and at least one intermediate position in which the door puts both distribution inlets in communication with the at least one distribution outlet.

By virtue of the rotatable door, it is possible to actively adjust the conveyance of the air flow from the mixing area to the various air outlets of the heating and/or air conditioning device, improving the stratification of the air flow.

Preferred embodiments of the invention are defined in the dependent claims, which are to be understood as an integral part of the present description.

Further features and advantages of the device according to the invention will become clearer from the following detailed description of an embodiment of the invention, made in reference to the accompanying drawings, provided purely for illustrative and non-limiting purposes, wherein:
- Figure 1 is a schematic cross-sectional view of a heating and/or air conditioning device according to the invention, in the "all-cold" position, or closed position;
- Figure 2 is a similar view to Figure 1, in an intermediate mixing position;
- Figure 3 is a similar view to the above, in the "all-hot" position, or open position;
- Figure 4 is a perspective view of a distribution means of the device in Figures 1-3;
- Figure 5 is a partial cross-sectional view of the distribution means of Figure 4 mounted on a heating and/or air conditioning device having a configuration different to that of Figures 1-3;
- Figure 6 is a partial cross-section view of a part of the heating and/or air conditioning device of Figure 5;
- Figure 7 is a partially sectional view of the heating and/or air conditioning device of Figure 6, whereupon a different embodiment of the distribution means are mounted; and
- Figures 8 and 9 are perspective views of two components of the distribution means shown in Figure 7.

The device depicted in the figures comprises a housing 10 delimiting an inlet duct 12 adapted to be supplied by an air flow (arrow F₁) driven by a centrifugal fan 13. The centrifugal fan 13 conventionally comprises an auger 13a and an impeller 13b housed in the auger 13a and driven by an electric motor (not shown). The fan 13 is in turn powered by an outer air flow drawn from outside the vehicle's passenger compartment, or by a recirculating air stream drawn from inside the passenger compartment.

An evaporator E may be transversely housed in the inlet duct 12 connected to a conventional air conditioning circuit so as to produce an outflow of air that may be conditioned if the evaporator is active.

Downstream, the inlet duct 12 emerges into a part of the air conditioning device dedicated to mixing hot and cold air veins. At the inlet of such mixing section, the inlet duct therefore defines an air inlet 14 bounded by opposing walls 15 and 16 formed in the housing 10.

The air inlet 14 defines a confluence zone that supplies an air transmitting branch 26 on one side, and an air heating branch 28 on the other side. The air heating branch 28 is delimited externally by a curved wall 30 of the housing 10 and internally by an inner partition 32. On the other hand, the transmitting branch 26 is delimited internally by the inner partition 32, and externally by an extension of the wall 16. The branches 26 and 28 communicate with each other on the one hand at the level of the confluence zone formed by the air inlet 14, and on the other hand at the level of another confluence zone 34, arranged downstream, which in the following will be referred to as the mixing zone.

One or more heating elements 36a, 36b are housed in the heating branch 28.

The mixing zone 34 conventionally communicates with various air distribution ducts that are used to distribute the treated air to various areas within the vehicle. For example, air outlets 37a may be envisaged which are configured to be connected to vents used for the defrosting/defogging of the windshield of a motor vehicle, air outlets 38a may be configured to be connected to vents arranged in the lower part of the passenger compartment of the motor vehicle (foot heating), air outlets 38c may be configured to be connected to vents provided on the dashboard of the motor vehicle, and so on.

Mixing means 40 are mounted in the box 10, at the mixing section of the air conditioning device.

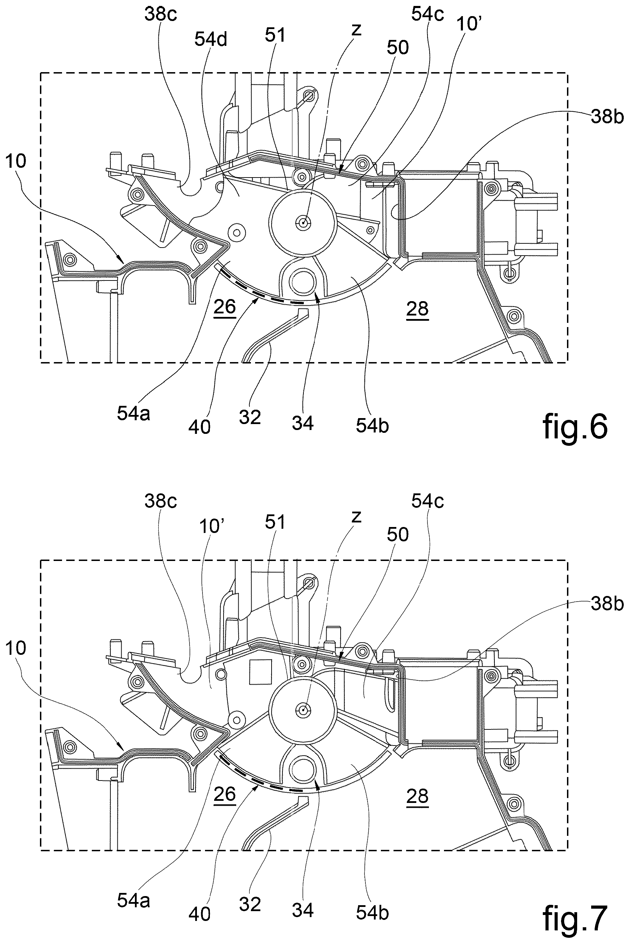

In the example shown, the mixing means 40 are arranged between the air inlet 14 and the air transmitting and air heating branches 26, 28. In an alternative embodiment (shown in Figures 6 and 7), the mixing means 40 could be arranged at the mixing zone 34.

The construction and the type of movement of the mixing means 40 are not essential for the purposes of the invention.

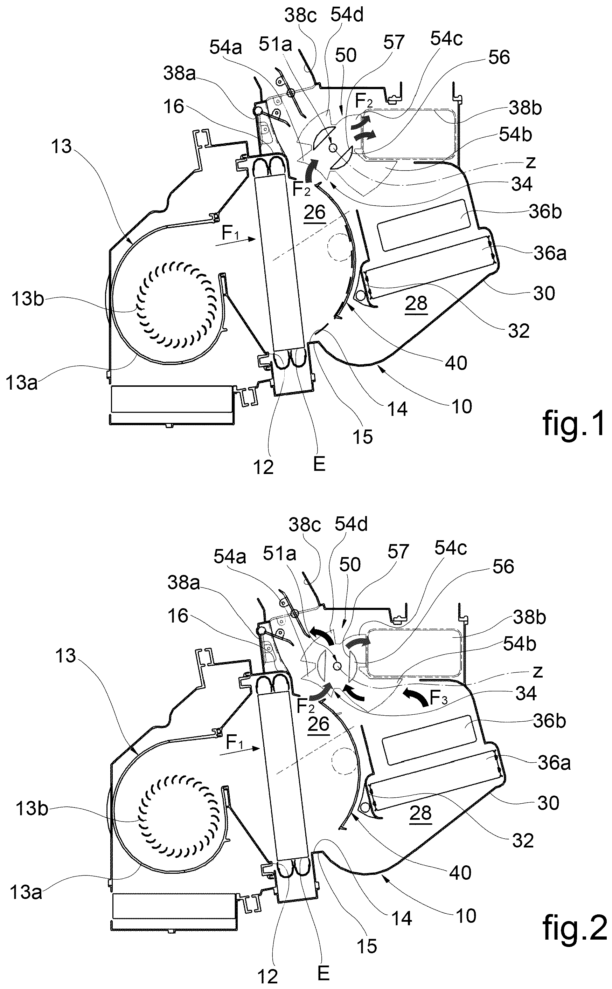

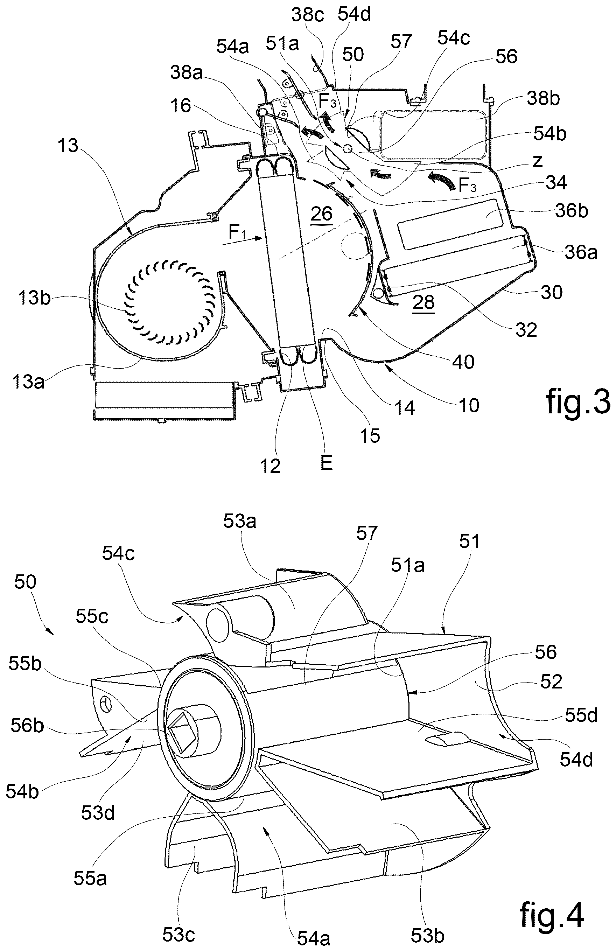

The mixing means 40 are adapted to oscillate between two extreme positions:
- a closed or "all-cold" position (shown by a dashed line in Figure 1), wherein the mixing means 40 prevent communication between the air inlet 14 and the air heating branch 28 and force the air flow to pass through the air transmitting branch 26, as indicated by the arrow F₂.
- an open or "all-hot" position (shown by a dashed line in Figure 3), wherein the mixing means 40 prevent communication between the air inlet 14 and the air transmitting branch 26 and forces the air flow to pass through the air heating branch 28, as indicated by the arrow F₃.

Figure 2 shows an intermediate position of the mixing means 40.

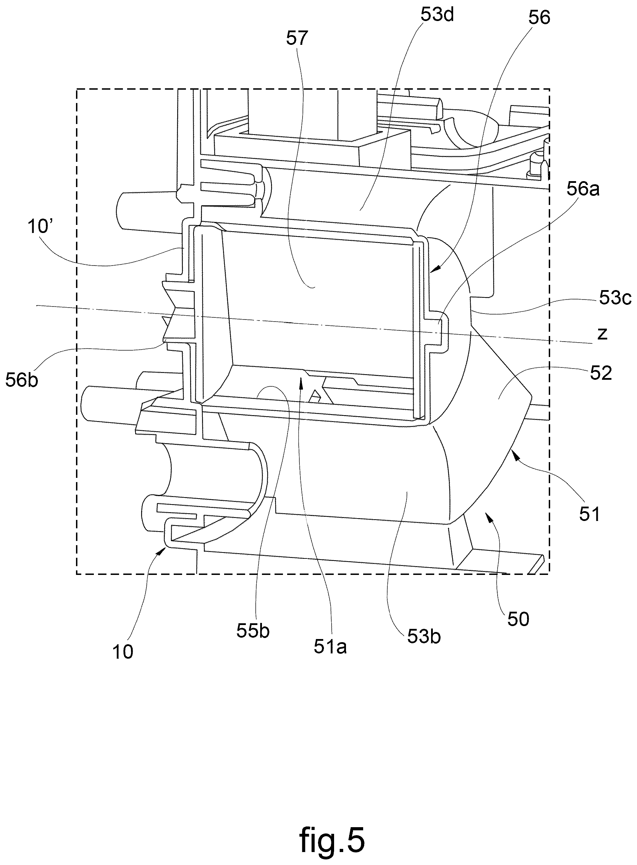

An air distribution means 50 are interposed between the mixing section and the air outlets 38a-38c of the heating and/or air conditioning device. Said distribution means 50 are shown in detail in Figures 4 and 5.

The air distribution means comprise a cross-shaped housing 51 fastened to the box 10 of the air conditioning device, at or immediately downstream of the mixing zone 34. According to alternative embodiments which are not shown, the housing 51 may be made, at least in part, in one piece with a portion of the box 10 wherein the mixing zone 34 is formed.

The housing 51 is made as a shell comprising a top wall 52 and a plurality of lateral walls 53a, 53b, 53c, 53d projecting from the peripheral edge of the top wall 52. On the side opposite the top wall 52 the housing 51 is open and configured to be coupled to a wall 10' of the box 10.

In cooperation with this wall 10', the housing 51 defines therein a circular chamber 51a wherefrom four ducts 54a, 54b, 54c, 54d extend in the radial direction, laterally delimited by the lateral walls 53a, 53b, 53c, 53d of the housing 51. At the confluence of each pair of ducts, the lateral walls 53a, 53b, 53c, 53d of the housing 51 have a respective apical portion extending in an arc of circumference and arranged at the perimeter of the circular chamber 51a. The housing 51 thus defines a first distribution inlet 55a, a second distribution inlet 55b and a pair of distribution outlets 55c, 55d, all facing the circular chamber 51a and interspersed with the aforesaid apical portions of the lateral walls 53a, 53b, 53c, 53d of the housing 51. The duct 54a enters the circular chamber 51a through the first distribution inlet 55a, while the duct 54b enters the circular chamber 51a through the second distribution inlet 55b. The ducts 54c and 54d branch off from the circular chamber 51a through the respective distribution outlets 55c and 55d. Each of the distribution outlets 55c, 55d is placed in front of a respective distribution inlet 55a, 55b.

The first distribution inlet 55a and the second distribution inlet 55b are connected to the air transmitting branch 26 and the air heating branch 28 through the respective ducts 54a and 54b, respectively. The distribution outlets 55c and 55d are connected to the air outlets 38a-38c of the heating and/or air conditioning device through the respective ducts 54c and 54d. In particular, the distribution outlet 55c and the relative duct 54c are connected to the footwell heating outlet 38b, while the distribution outlet 55d and the relative duct 54d are connected to the other outlets 38a and 38c. Although not appreciable in the figures, it is understood that the shape of the housing 51 is such to make a coupling with the corresponding passages obtained in the box 10 of the air conditioning device, and in particular with the air transmitting branch 26, with the air heating branch 28, and with the passages leading to the various air outlets 38a-38c. Such coupling may relate to only one part or to the entire extension of such ducts in the direction of height (direction orthogonal to the plane of the drawings in Figures 1, 2 and 3). In the event that the housing 51 covers the entire height extension of the aforesaid ducts, the air flows originating from the air transmitting branch 26 and the air heating branch 28 are entirely channeled into the housing 51, and the circular chamber 51a actually coincides with the mixing zone 34. In the event that the housing 51 covers only part of the height extension of the aforesaid ducts, only part of the air flows originating from the air transmitting branch 26 and the air heating branch 28 are channeled into the housing 51. The remaining part follows a parallel path from the mixing zone 34 to the air outlets 38a-38c, and is not involved in the adjustment imparted by the air distribution means 50.

Inside the circular chamber 51a a drum door 56 is arranged rotatably mounted about an axis z orthogonal to the directions going from the first distribution inlet 54a to the distribution outlet 54c and from the second distribution inlet 54b to the distribution outlet 54d, respectively. In the example shown, the drum door 56 comprises at opposite ends respective pins 56a and 56b coupled to respective seats obtained on the top wall 52 of the housing 51 and on the wall 10' of the box 10. In particular, the pin 56b coupled to the wall 10' of the box 10 is configured to be connected to an actuator (not shown) for controlling the drum door 56.

The drum door 56 has a body having circular symmetry about the axis z, through which a passage channel 57 is formed extending in the diametral direction. Preferably, the width of the passage channel 57 at the lateral surface of the drum door 56 is equal to or less than the width of each of the distribution inlets 55a and 55b. Furthermore, the width of the passage channel 57 at the lateral surface of the drum door 56 is equal to or smaller than the width of each of the distribution outlets 55c and 55d.

The drum door 56 is movable between a first position in which the passage channel 57 of the drum door 56 places the first distribution inlet 55a in communication with the distribution outlet 55c (Figure 1), a second position in which the passage channel 57 of the drum door 56 places the second distribution inlet 55b in communication with the other distribution outlet 55d (Figure 3), and at least one intermediate position in which the passage channel 57 of the drum door 56 places both distribution inlets 55a, 55b in communication with both of the distribution outlets 55c, 55d (Figure 2).

In the first position (Figure 1), the passage channel 57 of the drum door 56 is aligned with the first distribution inlet 55a and with the distribution outlet 55c, while the portions of the drum door 56 that laterally delimit the passage channel 57 occlude the second distribution inlet 55b and the other distribution outlet 55d. In the second position (Figure 3), the passage channel 57 of the drum door 56 is aligned with the second distribution inlet 55b and with the distribution outlet 55d, while the portions of the drum door 56 that laterally delimit the passage channel 57 occlude the first distribution inlet 55a and the other distribution outlet 55c. In the third position (Figure 2), the passage channel 57 of the drum door 56 is aligned with the apical portions of the lateral walls 53c and 53a respectively arranged between the first distribution inlet 55a and the second distribution inlet 55b, and between the distribution outlets 55c and 55d. Since the width of such apical portions is less than the width of the passage channel 57, it is possible to ensure that air flows from both the air transmitting branch 26 and the air heating branch 28 may be simultaneously conveyed to the air outlets 38a-38c.

For simplicity, in Figure 1 the air distribution means 50 have been represented in the first position, with the mixing means 40 in the closed position, in Figure 2 the air distribution means 50 have been represented in the intermediate position, with the mixing means 40 in the intermediate position, and in Figure 3 the air distribution means 50 have been represented in the second position, with the mixing means 40 in the open position. It is however understood that there is no such unambiguous relationship between the position of the air distribution means 50 and the position of the mixing means 40; the air distribution means 50 may therefore be adjusted in the different positions thereof for each of the positions of the mixing member 40. While, in general, the position of the mixing means 40 is established by a control device of the air conditioning device based upon a temperature setting entered by the user, the position of the air distribution means 50 is established automatically by the control device based upon operating protocols defined by the manufacturer.

By virtue of the arrangement described above, it is possible to actively regulate the conveyance of the air flow from the mixing area to the various air outlets of the heating and/or air conditioning device thereby improving the stratification of the air.

Figure 6 shows a part of a heating and/or air conditioning device having a different configuration than that of Figures 1 and 3. Elements corresponding to those of the preceding embodiment have been assigned the same numerical references; these elements will not be described again. In essence, in such a heating and/or air conditioning device the mixing means 40 (shown schematically with a dashed line) are arranged at the mixing zone 34, with the air distribution means 50 arranged immediately downstream of the mixing means 40. Therefore, Figure 6 shows only the final part of the air transmitting 26 and air heating branches 28, in proximity to the mixing zone 34. For a description of the air distribution means 50, reference is made to the description of Figures 1-5.

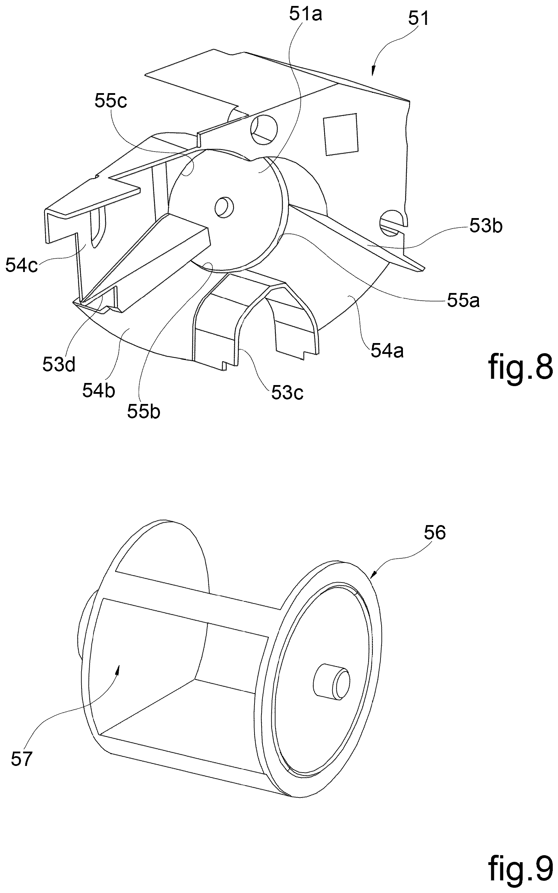

Figure 7 shows a part of a heating and/or air conditioning device having the same configuration as in Figure 6, wherein the air distribution means 50 are slightly different from that described above. Elements corresponding to those of the preceding embodiment have been assigned the same numerical references; these elements will not be described again. In essence, the air distribution means 50 (also shown in Figures 8 and 9) comprise a Y-shaped housing 51. In cooperation with the wall 10', the housing 51 defines therein a circular chamber 51a wherefrom three ducts 54a, 54b, 54c, laterally delimited by the lateral walls 53b, 53c, 53d of the housing 51, extend in the radial direction. At the confluence of each pair of ducts, the lateral walls 53b, 53c, 53d of the housing 51 have a respective apical portion extending in an arc of circumference and arranged at the perimeter of the circular chamber 51a. Thus, the housing 51 defines a first distribution inlet 55a, a second distribution inlet 55b, and a distribution outlet 55c, all facing the circular chamber 51a and interspersed with the aforesaid apical portions of the lateral walls 53b, 53c, 53d of the housing 51. The duct 54a enters the circular chamber 51a through the first distribution inlet 55a, while the duct 54b enters the circular chamber 51a through the second distribution inlet 55b. The duct 54c departs from the circular chamber 51a through the distribution outlet 55c.

The first distribution inlet 55a and the second distribution inlet 55b are connected to the air transmitting branch 26 and the air heating branch 28 through the respective ducts 54a and 54b, respectively. The distribution outlet 55c is connected to the air outlet 38b of the heating and/or air conditioning device through the duct 54c. As may be seen, there is no communication between the circular chamber 51a of the air distribution means 50 and the air outlets 38a and 38c of the heating and/or air conditioning device.

The housing 51 covers only part of the height extension of the ducts 26 and 28. Only part of the air flows from the air transmitting branch 26 and the air heating branch 28 are therefore channeled into the housing 51. The remaining part follows a parallel path from the mixing zone 34 to the air outlets 38a-38c, and is not involved in the adjustment imparted by the air distribution means 50. Consequently, the air flows intended for the air outlets 38a and 38c are not involved in the regulation imparted by the air distribution means 50.

Inside the circular chamber 51a the drum door 56 is arranged rotatably mounted about an axis z orthogonal to the directions going from the first distribution inlet 55a and from the second distribution inlet 55b to the distribution outlet 55c, respectively.

The drum door 56 has a body having circular symmetry about the axis z, through which a passage channel 57 is formed extending in the diametral direction.

The drum door 56 is movable between a first position in which the passage channel 57 of the drum door 56 puts the first distribution inlet 55a in communication with the distribution outlet 55c, a second position in which the passage channel 57 of the drum door 56 puts the second distribution inlet 55b in communication with the distribution outlet 55c, and at least one intermediate position in which the passage channel 57 of the drum door 56 puts both distribution inlets 55a, 55b in communication with the* distribution outlet 55c.

In the first position, the passage channel 57 of the drum door 56 is aligned with the first distribution inlet 55a and with the distribution outlet 55c, whilst a portion of the drum door 56 that laterally delimits the passage channel 57 occludes the second distribution inlet 55b. In the second position, the passage channel 57 of the drum door 56 is aligned with the second distribution inlet 55b and with the distribution outlet 55c, whilst the portion of the drum door 56 that laterally delimits the passage channel 57 occludes the first distribution inlet 55a. In the third position (Figure 2), the passage channel 57 of the drum door 56 is aligned with the apical portion of the side wall 53c arranged between the first distribution inlet 55a and the second distribution inlet 55b. Insofar as the width of this apical portion is less than the width of the passage channel 57, it is possible to ensure that air flows originating from both the air transmitting branch 26 and the air heating branch 28 may be simultaneously conveyed to the air outlet 38b.

It should be noted that, in the embodiment of Figures 7-9, the door 56 may be a rotatable door of a different type than a drum door, such as a tilting or butterfly door. In this case, the chamber 51a should be adapted to the type of shape and movement of the door. In any case, it is essential for the door to be movable between a first position wherein the door puts only the first distribution inlet 55a in communication with the distribution outlet 55c, a second position in which the door puts only the second distribution inlet 55b in communication with the distribution outlet 55c, and at least one intermediate position in which the door puts both distribution inlets 55a, 55b in communication with the distribution outlet 55c.

In the examples described above, the air distribution means 50 comprise two inlet ducts 54a, 54b and one or two outlet ducts 54c, 54d. It is possible to hypothesize an air distribution means with more than two outlet ducts, but this would require a correspondingly large inner chamber 51a, and therefore a larger overall size of the air distribution means 50.

## Claims

1. Heating and/or air conditioning device for a motor vehicle, comprising
a mixing section comprising an air transmitting branch (26) and an air heating branch (28), both supplied by an air inlet (14) and communicating with each other through a mixing zone (34), and mixing means (40) configured to distribute an air flow between the air transmitting branch (26) and the air heating branch (28), wherein said mixing means (40) are movable between two extreme positions comprising a closure position in which the mixing means (40)
prevent the air inlet (14) and the mixing zone (34) from communicating with each other through the air heating branch (28), and force the air flow to pass through the air transmitting branch (26), and an opening position in which the mixing means (40) prevent the air inlet (14) and the mixing zone (34) from communicating with each other through the air transmitting branch (26), and force the air flow to pass through the air heating branch (28);
air distributing means (50) interposed between the mixing section and a plurality of air outlets (38a, 38b, 38c) of the heating and/or air conditioning device;
wherein said air distributing means (50) comprise a housing (51) arranged at the mixing zone (34), wherein said housing (51) defines a chamber (51a), and further defines a first distribution inlet (55a) and a second distribution inlet (55b) facing the chamber (51a) and connected with the air transmitting branch (26) and the air heating branch (28), respectively, and at least one distribution outlet (55c, 55d) facing the chamber (51a) and connected with at least one of the air outlets (38a, 38b, 38c) of the heating and/or air conditioning device, and
a door (56) rotatably mounted in the chamber (51a) to control the distribution of the air flow between the distribution inlets (55a, 55b) and the at least one distribution outlet (55c, 55d),
wherein the door (56) is movable among a first position in which the door (56) puts the sole first distribution inlet (55a) in communication with the at least one distribution outlet (55c), a second position in which the door (56) puts the sole second distribution inlet (55b) in communication with the at least one distribution outlet (55c, 55d), and at least one intermediate position in which the door (56) puts both distribution inlets (55a, 55b) in communication with the at least one distribution outlet (55c, 55d).

2. Device according to claim 1, wherein the housing (51) defines a plurality of conduits (54a, 54b, 54c, 54d) radially extending from the chamber (51a), each conduit (54a, 54b, 54c, 54d) being connected to one of said distribution inlets (55a, 55b) and at least one distribution outlet (55a, 55b, 55c, 55d), respectively.

3. Device according to any of the preceding claims, wherein the housing (51) is formed as a shell comprising a top wall (52) and a plurality of lateral walls (53a, 53b, 53c, 53d) projecting from a peripheral edge of the top wall (52), wherein on a side opposite to the top wall (52) the housing (51) is coupled to a wall (10') of a box (10) of the heating and/or air conditioning device.

4. Device according to claim 3, wherein the door (56) is coupled for rotation, on opposite ends thereof, to the top wall (52) of the housing (51) and to the wall (10') of the box (10), respectively.

5. Device according to any of the preceding claims, wherein the chamber (51a) is circular and the door (56) is a drum door rotatably mounted in the chamber (51a), a passage channel (57) being formed through said drum door.

6. Device according to claim 5, wherein the passage channel (57) has a width at a lateral surface of the drum door (56) equal to or smaller than the width of each of the distribution inlets (55a, 55b).

## Patentansprüche

1. Heiz- und/oder Klimaanlage für ein Kraftfahrzeug, umfassend
einen Mischabschnitt umfassend einen Luftübertragungszweig (26) und einem Luftheizzweig (28), die beide von einem Lufteinlass (14) zugeführt werden und über eine Mischzone (34) miteinander in Kommunikation stehen, sowie Mischmittel (40), die dazu konfiguriert sind, einen Luftstrom zwischen dem Luftübertragungszweig (26) und dem Luftheizzweig (28) zu verteilen, wobei die Mischmittel (40) zwischen zwei Grenzstellungen beweglich sind, die eine Schließstellung umfassen, in der die Mischmittel (40) verhindern, dass der Lufteinlass (14) und die Mischzone (34) über den Luftheizzweig (28) miteinander in Kommunikation stehen, und den Luftstrom zwingen, durch den Luftübertragungszweig (26) zu strömen, und eine Öffnungsstellung, in der die Mischmittel (40) verhindern, dass der Lufteinlass (14) und die Mischzone (34) über den Luftübertragungszweig (26) miteinander in Kommunikation stehen, und den Luftstrom zwingen, durch den Luftheizzweig (28) zu strömen;
Luftverteilungsmittel (50), die zwischen dem Mischabschnitt und einer Mehrzahl von Luftauslässen (38a, 38b, 38c) der Heiz- und/oder Klimaanlage angeordnet sind;
wobei
die Luftverteilungsmittel (50) ein Gehäuse (51) umfassen, das an der Mischzone (34) angeordnet ist, wobei das Gehäuse (51) eine Kammer (51a) definiert und ferner einen ersten Verteilungseinlass (55a) und einen zweiten Verteilungseinlass (55b) definiert, die der Kammer (51a) zugewandt sind und mit dem Luftübertragungszweig (26) bzw. dem Luftheizzweig (28) verbunden sind, sowie mindestens einen Verteilungsauslass (55c, 55d), der der Kammer (51a) zugewandt ist und mit mindestens einem der Luftauslässe (38a, 38b, 38c) der Heiz- und/oder Klimaanlage verbunden ist, und
eine Klappe (56), die drehbar in der Kammer (51a) eingebaut ist, um die Verteilung des Luftstroms zwischen den Verteilungseinlässen (55a, 55b) und dem mindestens einen Verteilungsauslass (55c, 55d) zu steuern,
wobei die Klappe (56) zwischen einer ersten Stellung beweglich ist, in der die Klappe (56) nur den ersten Verteilungseinlass (55a) mit dem mindestens einen Verteilungsauslass (55c) in Kommunikation bringt, einer zweiten Stellung, in der die Klappe (56) nur den zweiten Verteilungseinlass (55b) mit dem mindestens einen Verteilungsauslass (55c, 55d) in Kommunikation bringt, und mindestens einer Zwischenstellung, in der die Klappe (56) beide Verteilungseinlässe (55a, 55b) mit dem mindestens einen Verteilungsauslass (55c, 55d) in Kommunikation bringt.

2. Vorrichtung nach Anspruch 1, wobei das Gehäuse (51) eine Mehrzahl von Leitungen (54a, 54b, 54c, 54d) definiert, die sich radial von der Kammer (51a) erstrecken, wobei jede Leitung (54a, 54b, 54c, 54d) jeweils mit einem der Verteilungseinlässe (55a, 55b) und mit mindestens einem Verteilungsauslass (55a, 55b, 55c, 55d) verbunden ist.

3. Vorrichtung nach einem der vorhergehenden Ansprüche, wobei das Gehäuse (51) als eine Schale ausgebildet ist, die eine Oberwand (52) und eine Mehrzahl von Seitenwänden (53a, 53b, 53c, 53d) umfasst, die sich aus einer Randkante der Oberwand (52) vorstehen, wobei das Gehäuse (51) auf der der Oberwand (52) gegenüberliegenden Seite mit einer Wand (10') eines Behälters (10) der Heiz- und/oder Klimaanlage gekoppelt wird.

4. Vorrichtung nach Anspruch 3, wobei die Klappe (56) an ihren gegenüberliegenden Enden drehbar mit der Oberwand (52) des Gehäuses (51) und mit der Wand (10') des Behälters (10) gekoppelt wird.

5. Vorrichtung nach einem der vorhergehenden Ansprüche, wobei die Kammer (51a) kreisförmig ist und die Klappe (56) eine Trommelklappe ist, die drehbar in der Kammer (51a) eingebaut wird, wobei ein Durchgangskanal (57) durch die Trommelklappe ausgebildet ist.

6. Vorrichtung nach Anspruch 5, wobei der Durchgangskanal (57) an einer Seitenfläche der Trommelklappe (56) eine Breite aufweist, die gleich oder kleiner als die Breite jedes der Verteilungseinlässe (55a, 55b) ist.

## Revendications

1. Dispositif de chauffage et/ou de climatisation pour véhicule automobile, comprenant
une section de mélange comprenant une branche de transmission d'air (26) et une branche de chauffage d'air (28), toutes deux alimentées par une entrée d'air (14) et communiquant entre elles à travers une zone de mélange (34), et des moyens de mélange (40) configurés pour distribuer un flux d'air entre la branche de transmission d'air (26) et la branche de chauffage d'air (28), lesdits moyens de mélange (40) étant mobiles entre deux positions extrêmes comprenant une position de fermeture dans laquelle les moyens de mélange (40) empêchent la communication entre l'entrée d'air (14) et la zone de mélange (34) à travers la branche de chauffage d'air (28), et forcent le flux d'air à passer par la branche de transmission d'air (26), et une position d'ouverture dans laquelle les moyens de mélange (40) empêchent la communication entre l'entrée d'air (14) et la zone de mélange (34) à travers la branche de transmission d'air (26), et forcent le flux d'air à passer par la branche de chauffage d'air (28);
des moyens de distribution d'air (50) interposés entre la section de mélange et une pluralité de sorties d'air (38a, 38b, 38c) du dispositif de chauffage et/ou de climatisation;
dans lequel
lesdits moyens de distribution d'air (50) comprennent un boîtier (51) disposé au niveau de la zone de mélange (34), ledit boîtier (51) définissant une chambre (51a), et définissant en outre une première entrée de distribution (55a) et une seconde entrée de distribution (55b) faisant face à la chambre (51a) et reliées respectivement à la branche de transmission d'air (26) et à la branche de chauffage d'air (28), et au moins une sortie de distribution (55c, 55d) faisant face à la chambre (51a) et reliée à au moins une des sorties d'air (38a, 38b, 38c) du dispositif de chauffage et/ou de climatisation, et
un volet (56) monté rotatif dans la chambre (51a) pour contrôler la distribution du flux d'air entre les entrées de distribution (55a, 55b) et ladite au moins une sortie de distribution (55c, 55d),
le volet (56) étant mobile entre une première position dans laquelle le volet (56) met uniquement la première entrée de distribution (55a) en communication avec ladite au moins une sortie de distribution (55c), une seconde position dans laquelle le volet (56) met uniquement la seconde entrée de distribution (55b) en communication avec ladite au moins une sortie de distribution (55c, 55d), et au moins une position intermédiaire dans laquelle le volet (56) met les deux entrées de distribution (55a, 55b) en communication avec ladite au moins une sortie de distribution (55c, 55d).

2. Dispositif selon la revendication 1, dans lequel le boîtier (51) définit une pluralité de conduits (54a, 54b, 54c, 54d) s'étendant radialement à partir de la chambre (51a), chaque conduit (54a, 54b, 54c, 54d) étant relié à l'une desdites entrées de distribution (55a, 55b) et à au moins une sortie de distribution (55a, 55b, 55c, 55d), respectivement.

3. Dispositif selon l'une quelconque des revendications précédentes, dans lequel le boîtier (51) est formé en tant que coque comprenant une paroi supérieure (52) et une pluralité de parois latérales (53a, 53b, 53c, 53d) s'étendant à partir d'un bord périphérique de la paroi supérieure (52), le boîtier (51) étant accouplé, du côté opposé à la paroi supérieure (52), à une paroi (10') d'un boîtier (10) du dispositif de chauffage et/ou de climatisation.

4. Dispositif selon la revendication 3, dans lequel le volet (56) est accouplé en rotation, à ses extrémités opposées, à la paroi supérieure (52) du boîtier (51) et à la paroi (10') du boîtier (10), respectivement.

5. Dispositif selon l'une quelconque des revendications précédentes, dans lequel la chambre (51a) est circulaire et le volet (56) est un volet tambour monté rotatif dans la chambre (51a), un canal de passage (57) étant formé à travers ledit volet tambour.

6. Dispositif selon la revendication 5, dans lequel le canal de passage (57) présente, à la surface latérale du volet tambour (56), une largeur égale ou inférieure à la largeur de chacune des entrées de distribution (55a, 55b).
